# EUROPÄISCHE PATENTSCHRIFT

(11) **EP 2 210 087 B1**
(45) Veröffentlichungstag und Bekanntmachung des Hinweises auf die Patenterteilung: **10.08.2011**
(21) Anmeldenummer: 08848824.2
(22) Anmeldetag: 28.10.2008
(51) Int. Cl.: G01N 30/84, G01N 1/00, G01N 30/38, G01N 30/72, B01D 59/44, G01N 30/46, G01N 1/40

(54) **VERFAHREN UND VORRICHTUNG ZUR ISOTOPENVERHÄLTNISANALYSE**
METHOD AND APPARATUS FOR ISOTOPE-RATIO ANALYSIS
PROCÉDÉ ET DISPOSITIF POUR ANALYSER LES RAPPORTS ISOTOPIQUES

(30) Priorität: 13.11.2007 DE 102007054419
(43) Veröffentlichungstag der Anmeldung: 28.07.2010
(73) Patentinhaber: Thermo Fisher Scientific (Bremen) GmbH, 28199 Bremen (DE)
(72) Erfinder: KRUMMEN, Michael, 26129 Oldenburg (DE); SCHWIETERS, Johannes, 27777 Garderkesee (DE)
(74) Vertreter: Heiland, Karsten
(86) Internationale Anmeldenummer: PCT/EP2008/009078
(87) Internationale Veröffentlichungsnummer: WO 2009/062594

(56) Entgegenhaltungen:
- DE-A1- 10 216 975
- GB-A- 2 312 743
- GB-A- 2 431 168
- US-A1- 2006 054 543
- US-A1- 2007 199 874
- GODIN J P; HAU J; FAY L B; HOPFGARTNER G: "Isotope ratio monitoring of small molecules and macromolecules by liquid chromatography coupled to isotope ratio mass spectrometry" RAPID COMMUNICATIONS IN MASS SPECTROMETRY, Bd. 19, Nr. 18, 26. August 2005 (2005-08-26), Seiten 2689-2698, XP002512214 WILEY
- KRUMMEN M; HILKERT A W; JUCHELKA D; DUHR A; SCHLUETER H J; PESCH R: "A new concept for isotope ratio monitoring liquid chromatography/mass spectrometry" RAPID COMMUNICATIONS IN MASS SPECTROMETRY, Bd. 18, Nr. 19, 31. August 2004 (2004-08-31), Seiten 2260-2266, XP002512215 WILEY
- MCMAHON G P; KELLY M T: "Determination of aspirin and salicylic acid in human plasma by column-switching liquid chromatography using on-line solid-phase extraction" ANALYTICAL CHEMISTRY, Bd. 70, Nr. 2, 15. Januar 1998 (1998-01-15), Seiten 409-414, XP002512216 in der Anmeldung erwähnt

## Beschreibung

Die Erfindung betrifft ein Verfahren zur Isotopenverhältnisanalyse.

Zur Durchführung der Isotopenverhältnisanalyse werden hochpräzise Isotopenanalysatoren verwendet, wie beispielsweise spezielle Massenspektrometer (IRMS) oder Laserabsorptionsmesseinrichtungen oder andere geeignete Analysatoren. Den Analysatoren sind in der Regel gasförmige Substanzen zuzuführen. Besonderheiten sind deshalb bei der Analyse von Flüssigkeiten oder Feststoffen zu berücksichtigen. Diese können beispielsweise als Gemisch über einen Flüssigchromatographen (LC bzw. HPLC) bereitgestellt werden. In dem Flüssigchromatographen erfolgt eine zeitliche Trennung der in der Flüssigkeit gelösten Substanzen. Angewendet wird die Flüssigchromatographie unter anderem auf Substanzen, die Kohlenstoff, Stickstoff, Sauerstoff, Wasserstoff und/oder Schwefel enthalten. Zur Isotopenverhältnisbestimmung der genannten Elemente ist eine Überführung der Substanzen (Analyte) in gasförmige Umwandlungsprodukte erforderlich. Geeignete Gase sind typischerweise zumindest H₂, CO, CO₂, N₂ und SO₂.

Die Kopplung eines Flüssigchromatographen mit einem IRMS ist beispielsweise bekannt aus der DE 102 16 975. Gemäß dem dort beschriebenen Verfahren wird aus dem Eluat eines Flüssigchromatographen Gas in Gegenwart des Eluats erzeugt. Die im Eluat gelösten Analysesubstanzen werden in das Gas überführt. Anschließend wird das Gas vom Eluat getrennt und dem IRMS zugeführt.

Eine Besonderheit stellt auch die Isotopenverhältnisanalyse auf der Grundlage flüssiger, organischer Proben dar, beispielsweise zur Bestimmung der Kohlenstoffisotope 13C und 12C. Geeignete Verfahren zur Berücksichtigung des in einer Analysesubstanz enthaltenen Kohlenstoffs aus löslichen Verbindungen oder nur aus organischen Verbindungen sind in der DE 10 2004 010 969 offenbart.

Aus der DE 10 2005 049 152 ist es bekannt, das Eluat eines Flüssigchromatographen einer Elektrolyse auszusetzen zur Bildung und Bereitstellung einer gasförmigen Substanz oder eines Vorprodukts für eine Substanz, welche von einem IRMS analysiert werden kann.

Schließlich ist es bekannt, flüssige oder feste Proben in einem sogenannten Element-Analysator durch Pyrolyse oder Oxidation umzuwandeln und so interessierende Bestandteile in Gasform für eine Isotopenanalyse bereitzustellen. Ein derartiger Element-Analysator ist beispielsweise der Finnigan TC/EA der Anmelderin bzw. der Thermo Electron Corporation.

Den bekannten Verfahren ist gemeinsam, dass die Bereitstellung der gasförmigen Substanz für die Isotopenanalyse nicht beliebig durchführbar ist. Zumindest aus kosten- und messtechnischen Gründen können die gasförmigen Substanzen nur aus bestimmten Eluaten gebildet werden. Derart ideale Eluate liegen häufig nicht vor. Insbesondere gilt dies bei der Bestimmung von Isotopenverhältnissen in Pharmazeutika, Pestiziden, Lebensmittelzusatzstoffen und anderen Substanzen, die relativ große Moleküle enthalten.

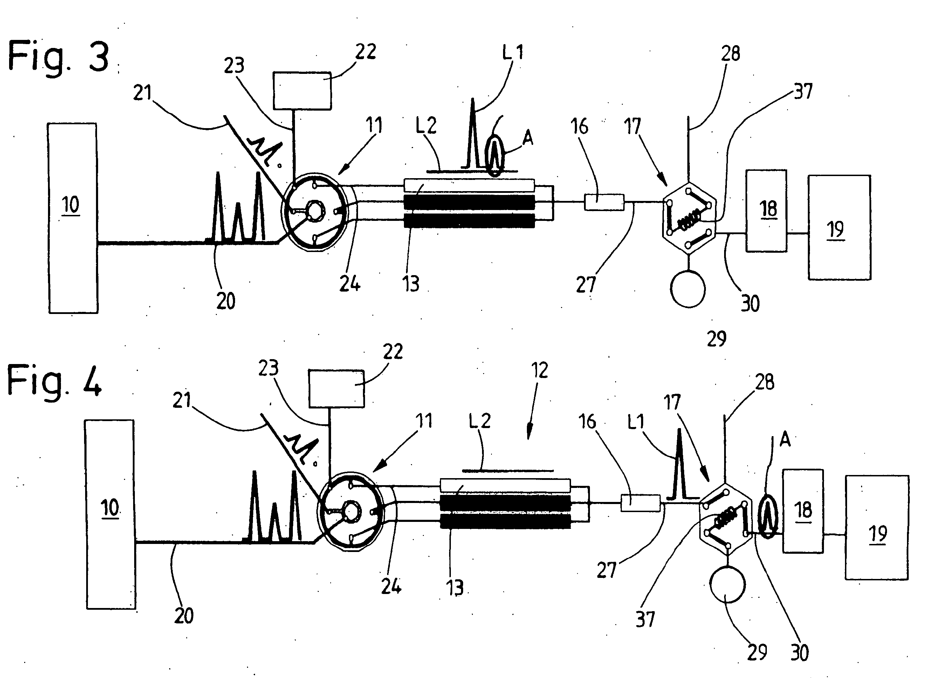

Der Aufsatz von Godin et al. "Isotope ratio monitoring of small molecules and macromolecules by liquid chromatography coupled to isotope ratio mass spectrometry" Rapid Communications in Mass Spectrometry, Bd. 19, Nr. 18, 26. August 2005, Seiten 2689-2698, XP002512214 Wiley, zeigt in Fig. 4 drei verschiedene, voneinander unabhängige Verfahren. Gemeinsam ist lediglich die Kopplung LC-IRMS. Der mittlere Zweig unter der Überschrift "Mixture of Compounds" betrifft die sogenannte "Fraction collection". Dabei werden mehrere Teil-Eluate eines LC in geeigneten Gefäßen getrennt voneinander gesammelt. Die Teil-Eluate enthalten jeweils ein organisches Lösungsmittel, welches entfernt wird. Herkömmlicherweise geschieht dies durch Erwärmen, sodass das organische Lösungsmittel verdunstet. Das vom organischen Lösungsmittel befreite Rest-Eluat wird in einem anorganischen Lösungsmittel gelöst und zur Handhabung in einem IRMS weiter vorbereitet.

In dem Aufsatz von Krummen et al. "A new concept for isotope ratio monitoring liquid chromatography/mass spectrometry" Rapid Communications in Mass Spectrometry, Bd. 18, Nr. 19, 31. August 2004, Seiten 2260-2266, XP002512215 Wiley, ist eine Umwandlung eines flüssigen Eluaten in ein für ein IRMS geeignetes Gas gezeigt.

Den Spezialfall einer dreidimensionalen LC mit hydrophiler, hydrophober und ionischer Komponente zeigt die US 2007/199874 A1.

Auf der Seite der Anwender existieren oftmals umfängliche Analyseeinrichtungen zur qualitativen Bestimmung von Substanzen. Hierzu zählen auch Hochleistungs-flüssigchromatographen (HPLC), die darüber hinaus auf spezielle Substanzen abgestimmt sein können. Ein derart spezielles HPLC-System ist bekannt aus Analytical Chemistry, 1998, Vol. 70, 409-414, Gillian P. McMahon and Mary T. Kelly "Determination of Aspirin and Salicylic Acid in Human Plasma by Column-Switching Liquid Chromatography Using On-Line Solid-Phase Extraction". Offenbart ist ein HPLC, bei dem eine injizierte Probe zunächst von einem Lösungsmittel mitgenommen und über eine erste Säule geführt wird. Anschließend wird eine Teilmenge der Probe durch eine mobile Phase aus der ersten Säule herausgetragen und über eine zweite Säule geführt. Das Eluat der zweiten Säule wird durch einen UV-Detektor geleitet und dort analysiert. Das Eluat ist aufgrund des enthaltenen Lösemittels für die unmittelbare Umsetzung in ein für die Isotopenanalyse geeignetes Gas nicht geeignet. Der Anwender müsste in diesem Fall sein HPLC-Verfahren zur Analyse von Aspirin und Salicylsäure an die Besonderheiten der Isotopenanalyse anpassen. Insbesondere an dieser Stelle setzt die Erfindung an. Ziel ist die Bereitstellung eines Verfahrens und einer Vorrichtung, derart, dass der Anwender sein etabliertes LC-Verfahren (insbesondere HPLC-Verfahren) beibehalten kann und zugleich eine Isotopenverhältnisanalyse möglich ist. Hierzu weist das erfindungsgemäße Verfahren die Merkmale des Anspruchs 1 auf.

Mit dem erfindungsgemäßen Verfahren können nun erstmals nahezu alle LC-fähigen Substanzen der Isotopenverhältnisanalyse unterzogen werden. Zugleich kann der Anwender das von ihm erprobte LC- oder HPLC-Verfahren beibehalten. Zwischen das LC-Verfahren des Anwenders und die Zufuhr des Gases zum Isotopenanalysator sind zusätzliche Verfahrensschritte geschaltet, die eine Verbindung der bekannten Verfahren miteinander ermöglichen. Ein wichtiger Schritt dabei ist das "Ausschneiden" der interessierenden Komponenten aus dem Eluat des LC-Verfahrens. Das "Ausschneiden" kann beispielsweise erfolgen durch insbesondere programmgesteuertes Umschalten zwischen verschiedenen Leitungen am Ausgang der LC-Einrichtung. Die derart "ausgeschnittene" interessierende Komponente wird dann optional zwischengespeichert oder sogleich aufbereitet und damit in einem anderen Trägerfluid bereitgestellt. Dieses zweite Trägerfluid ist individuell ausgewählt und abgestimmt auf das Eluat des LC-Verfahrens einerseits und die Kompatibilität mit den noch folgenden Verfahrensschritten, insbesondere die Möglichkeit der Bildung eines gasförmigen Umwandlungsprodukts der Analyten.

Nach einem weiteren Gedanken der Erfindung kann der interessierende Teil des Eluats aufgefangen, zwischengespeichert und danach aufbereitet werden. Eine Möglichkeit der Zwischenspeicherung ist das Auffangen des interessierenden Teils des Eluats auf einer Trennsäule oder in einem Leitungsabschnitt. Auch können zunächst mehrmals hintereinander die interessierenden Teil-Eluate aufgefangen und gespeichert werden. Dadurch können größere Mengen aufbereitet werden.

In Fortbildung der Erfindung ist vorgesehen, dass der interessierende Teil des Eluats vor der Trennsäule aufgefangen, zwischengespeichert und zusammen mit dem zweiten flüssigen Trägerfluid über die Trennsäule geführt wird.

Nach einem weiteren Gedanken der Erfindung ist vorgesehen, dass das Teil-Eluat erst mit dem zweiten Trägerfluid zusammengebracht und danach das erste Trägerfluid abgetrennt wird. Möglich ist aber auch eine umgekehrte Vorgehensweise, nämlich das Abtrennen des ersten Trägerfluids, etwa durch Verdampfen (auch durch Laser), und das daran anschließende Zusammenführen des Teil-Eluats mit dem zweiten Trägerfluid.

Nach einem weiteren Gedanken der Erfindung ist vorgesehen, dass das zweite Trägerfluid mit dem Teil-Eluat oder das zweite Trägerfluid und das vom ersten Trägerfluid befreite Teil-Eluat über eine Trennsäule geführt werden, und dass ein interessierender Teil des dabei anfallenden zweiten Eluats abgetrennt und für die Aufbereitung gemäß Anspruch 1 Merkmal d) zur Verfügung gestellt wird. In diesem Fall entspricht der interessierende Teil des zweiten Eluats dem aufbereiteten Teil-Eluat des Anspruchs 1.

Vorteilhafterweise wird der interessierende Teil des zweiten Eluats auf der Trennsäule zwischengespeichert. Von hier aus kann das zweite Teil-Eluat auf einfache Weise für die weiteren Schritte zur Verfügung gestellt werden.

Nach einem weiteren Gedanken der Erfindung ist vorgesehen, dass das aufbereitete Teil-Eluat (zweites Eluat) zur Bildung der gewünschten gasförmigen Umwandlungsprodukte physikalisch, chemisch und/oder elektrochemisch behandelt wird. Vorteilhafterweise wird aus dem Teil-Eluat ein Gas erzeugt, welches die gewünschten Analyten oder deren Umwandlungsprodukte enthält, wobei das Gas von der Flüssigkeit zumindest an einer Membran getrennt wird. Zuvor kann das Gas beispielsweise durch Erwärmung (auch durch Laser), durch Zugabe von Säure oder elektrolytisch erzeugt werden. Weitere Möglichkeiten zur Gaserzeugung sind möglich.

Das aufbereitete Teil-Eluat kann auch erhitzt werden zur Bildung der gewünschten gasförmigen Analyten oder deren Umwandlungsprodukte, wobei die Siedetemperatur des flüssigen Trägerfluids im Teil-Eluat niedriger ist als die Siedetemperatur der Analyten. Die Analyten gehen dadurch später in die Gasform über oder können dann verbrannt werden.

Zur Bildung der gewünschten gasförmigen Umwandlungsprodukte der Analyten kann das aufbereitete Teil-Eluat auch in einem Reaktor thermisch zersetzt werden oder durch elektrolytische Reaktion des Eluats erzeugt werden. Auch ist möglich, dass auf diese Weise nur Vorprodukte der Umwandlungsprodukte erzeugt werden. Die Vorprodukte werden dann weiteren Verfahrensschritten unterzogen. Die Volumina des Reaktors sind an die erwarteten Analyt-Mengen angepasst.

Vorteilhafterweise sind als Isotopenanalysatoren ein Isotopenmassenspektrometer (IRMS) oder eine Laserabsorptionsmesseinrichtung vorgesehen.

Nach einem weiteren Gedanken der Erfindung ist vorgesehen, dass der aufgefangene, interessierende Teil des Eluats gemäß Anspruch 1 Merkmal b) erhitzt wird bis zum Verdampfen des flüssigen Trägerfluids, und dass ein nicht verdampfter Teil die Analyten enthält und mit dem zweiten flüssigen Trägerfluid zusammengeführt und von diesem mitgenommen wird.

Ein Verdampfen des Teil-Eluats, des aufbereiteten Teil-Eluats, der Trägerfluide und/oder der Analyten kann auch außerhalb des Reaktors durchgeführt werden. Möglich ist auch ein Verdampfen mehrerer Komponenten mit derselben Apparatur: Mit einer ersten Heizstufe Verdampfen des Trägerfluids und mit einer zweiten Heizstufe Verdampfen der Analyten. Letztere können optional im Gasstrom einem Hochtemperatur-Reaktor zur Verbrennung zugeführt werden.

Die erfindungsgemäße Vorrichtung zur Isotopenverhältnisanalyse weist die Merkmale des Anspruchs 10 auf.

Vorteilhafterweise ist ein Detektor vorgesehen zum Detektieren eines interessierenden Teils des aufbereiteten Teil-Eluats. Anhand der Detektorsignale kann der interessierende Teil des aufbereiteten Teil-Eluats gezielt in die Einrichtung zur Bildung eines oder mehrerer gasförmiger Umwandlungsprodukte eingelassen werden.

Nach einem weiteren Gedanken der Erfindung enthält die dem LC nachgeordnete Einrichtung zum Aufnehmen zumindest eines Teil-Eluats mindestens eine Trennsäule. Auf dieser Trennsäule können die Bestandteile des Teil-Eluats weiter voneinander getrennt werden, insbesondere das (erste) flüssige Trägerfluid des LC vom Eluat im Übrigen.

Vorteilhafterweise weist die dem LC nachgeordnete Einrichtung zum Aufnehmen zumindest eines Teil-Eluats eine Zufuhrvorrichtung für das zweite flüssige Trägerfluid auf. Das zweite flüssige Trägerfluid ist so zeitlich und mengenmäßig gezielt der genannten Einrichtung zuführbar.

In Fortbildung der Erfindung ist vorgesehen, dass die dem LC nachgeordnete Einrichtung zum Aufnehmen zumindest eines Teil-Eluats ein Speichervolumen für das Teil-Eluat aufweist. Vorzugsweise ist die Zufuhrvorrichtung für das zweite flüssige Trägerfluid dem Speichervolumen vorgeordnet. Dadurch kann das zweite flüssige Trägerfluid das Speichervolumen durchspülen und so das Teil-Eluat aus dem Speichervolumen heraustransportieren.

Nach einem weiteren Gedanken der Erfindung ist vorgesehen, dass die dem LC nachgeordnete Einrichtung zum Aufnehmen zumindest eines Teil-Eluats ein Multi-Port-Ventil aufweist, an das eine Pumpe für die Zufuhr des zweiten flüssigen Trägerfluids, ein Ausgang des Flüssigchromatographen, optional ein Speichervolumen für das Teil-Eluat und eine oder mehrere Säulen zum Aufnehmen des Teil-Eluats oder einer daraus gebildeten Flüssigkeit angeschlossen sind.

Die Einrichtung zur Bildung der gasförmigen Umwandlungsprodukte kann einen Element-Analysator aufweisen. Diesem kann eine Verdampfungseinrichtung vorgeordnet sein. Alternativ oder zusätzlich kann die Einrichtung zur Bildung der gasförmigen Umwandlungsprodukte eine Membran aufweisen, die gasdurchlässig aber flüssigkeitsundurchlässig ist. Als Isotopenanalysator ist vorzugsweise ein Isotopenmassenspektrometer (IRMS) vorgesehen.

Verfahren und Vorrichtung gemäß der Erfindung sind vorzugsweise verwendbar zur Analyse von Lebensmitteln, Lebensmittelzusatzstoffen, Blut, Plasma und Urin. Zielsubstanzen (Analyten) sind insbesondere Pharmazeutika, Stoffwechselprodukte, Steroide, Proteine, Peptide, Aminosäuren, RNA/DNA, organische Säuren, Pestizide und Nitrate. Außerdem besteht eine bevorzugte Anwendung in der Bestimmung eines Isotopen-Fingerabdrucks, nämlich in der Isotopenverhältnisanalyse für mehr als ein Element, insbesondere mindestens zwei Elemente aus den Elementen Kohlenstoff, Sauerstoff, Stickstoff, Schwefel und Wasserstoff.

Weitere Merkmale der Erfindung ergeben sich aus den Ansprüchen und aus der Beschreibung im Übrigen. Vorteilhafte Ausführungsbeispiele der Erfindung werden nachfolgend anhand von Zeichnungen näher erläutert. Es zeigen:
- Fig. 1: eine erfindungsgemäße Vorrichtung im Standby-Betrieb,
- Fig. 2: die Vorrichtung gemäß Fig. 1 beim Zwischenspeichern eines interessierenden Teil-Eluats,
- Fig. 3: die Vorrichtung gemäß Fig. 1 bei der Zufuhr eines zweiten flüssigen Trägerfluids und zugleich beim Trennen vom ersten flüssigen Trägerfluid,
- Fig. 4: die Vorrichtung gemäß Fig. 1 beim Abtrennen des ersten flüssigen Trägerfluids bzw. beim "Ausschneiden" eines interessierenden Teils des mehrere Trägerfluide und den oder die Analyten enthaltenden Eluats,
- Fig. 5: die Vorrichtung gemäß Fig. 1 beim Erzeugen gasförmiger Komponenten (Umwandlungsprodukte) und Messen der Isotopenverhältnisse,
- Fig. 6: eine abgewandelte Ausführungsform ähnlich der in Fig. 1 gezeigten Vorrichtung, jedoch mit einer Speichersäule zum Auffangen des interessierenden Teil-Eluats anstelle einer Trennsäule.

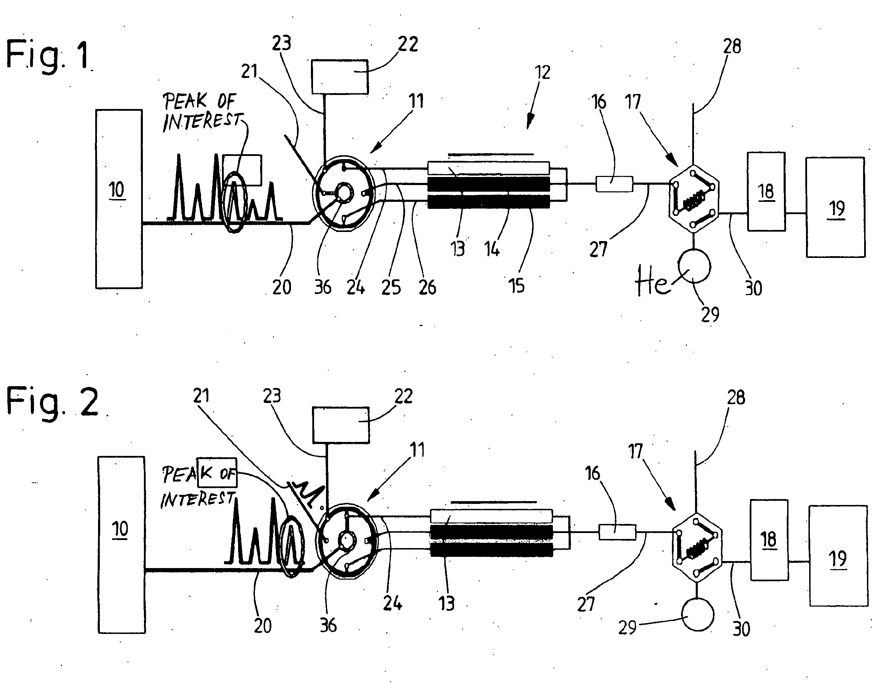

Es wird zunächst Bezug genommen auf die Fig. 1 bis 4, anhand derer der Ablauf eines erfindungsgemäßen Verfahrens sowie der Aufbau einer entsprechenden Vorrichtung erläutert werden.

Einem Hochleistungs-Flüssigchromatographen (HPLC) 10 nachgeordnet sind ein Umschaltventil 11, eine Gruppe 12 von Trennsäulen 13, 14, 15, ein Detektor 16, ein weiteres Umschaltventil 17, ein Phasenwandler, der hier als Elementanalysator 18 ausgebildet ist, und ein Isotopenanalysator, hier als Isotopenmassenspektrometer (IRMS) 19.

An das erste Umschaltventil 11 sind angeschlossen eine Leitung 20 vom HPLC 10, eine Waste-Leitung 21, ein Vorrat für ein zweites Lösungsmittel mit einer Pumpe 22 und einer zugehörigen Leitung 23 sowie drei parallele Leitungen 24, 25 und 26 zu den drei Trennsäulen 13, 14, 15. Das Umschaltventil 11 kann außerdem ein Speichervolumen 36 aufweisen.

Der Detektor 16 dient der Erfassung und Weiterleitung von Signal-Peaks einzelner Analyten aufgrund der aus den Trennsäulen 13, 14, 15 austretenden Flüssigkeiten. Bekannte und auch in diesem Zusammenhang gut verwendbare Detektoren sind zumindest UV-Detektoren, PDAs (Photo Diode Array), Wärmeleitfähigkeitsdetektoren (WLD bzw. TCD) und Fluoreszenz-Detektoren.

An das zweite Umschaltventil 17 sind angeschlossen eine Leitung 27 vom Detektor 16, eine Waste-Leitung 28, eine Gasquelle 29, eine Leitung 30 zum Element-Analysator 18 und ein Speichervolumen 37 (Probeschleife).

In einem ersten Verfahrensschritt (Fig. 1) fließt ein Eluat des HPLC 10 über die Leitung 20 zum Umschaltventil 11. Vorzugsweise werden bekannte und evaluierte Eluenten im HPLC verwendet. Ebenso ist typischerweise bekannt, welche Stoffe analysiert werden sollen und wann ein die interessierenden Bestandteile (Analyten) enthaltendes Teil-Eluat den HPLC 10 verlässt. Entsprechend ist berechenbar, wann das relevante Teil-Eluat das Umschaltventil 17 erreicht. Alternativ oder zusätzlich kann ein nicht gezeigter Detektor dem HPLC 10 zugeordnet sein.

Das erste Umschaltventil 11 ist in Fig. 1 so geschaltet, dass die Leitung 20 in die Waste-Leitung 21 mündet. Sobald das interessierende Teil-Eluat das Umschaltventil 11 erreicht, wird dieses umgeschaltet, derart, dass die Leitung 20 über das Speichervolumen 36 verbunden ist mit der ersten Trennsäule 13, siehe Fig. 2.

Im interessierenden Teil-Eluat befindet sich der Analyt (oder mehrere Analyten) sowie ein flüssiges Trägerfluid aus dem HPLC 10, hier ein erstes Lösungsmittel. Nach dem Austreten des interessierenden Teil-Eluats aus der Leitung 20 bzw. dem HPLC 10 wird das Umschaltventil 11 wieder zurückgestellt in den Zustand gemäß Fig. 1 mit der Verbindung zwischen Leitung 20 und Waste-Leitung 21, siehe Fig. 3. Zur Erhöhung der Menge kann der erste Verfahrensschritt auch mehrfach durchgeführt werden. Das jeweils anfallende interessierende Teil-Eluat wird dann gesammelt, etwa auf der Trennsäule 13 oder im Speichervolumen 36.

Das in der Trennsäule 13 befindliche, interessierende Teil-Eluat enthält das flüssige Trägerfluid des HPLC 10, nämlich das erste Lösemittel, und den oder die Analyten. Über die Pumpe 22 und das Umschaltventil 11 wird der Trennsäule 13 ein zweites flüssiges Trägerfluid, nämlich hier ein zweites Lösemittel, zugeführt, siehe Fig. 3. Den Detektor 16 passieren nacheinander das erste Lösemittel und der Analyt, zumindest letzterer parallel zum zweiten Lösemittel. Das Ausgangssignal des Detektors 16 steuert das zweite Umschaltventil 17 so, dass das erste Lösemittel L1 in die Waste-Leitung 28 gelangt und nur der Analyt A mit dem zweiten Lösemittel L2 in das Speichervolumen 37 strömen kann, siehe Fig. 3. In der Schaltung gemäß Fig. 4 gelangen der Analyt mit dem zweiten Lösemittel aus dem Speichervolumen 37 - durch den Druck der Gasquelle 29 - zum Element-Analysator 18.

Der Inhalt der Trennsäule 13 (die stationäre Phase der Trennsäule) ist hier vorzugsweise so auf das zweite Lösemittel abgestimmt, dass letzteres in der Trennsäule 13 nicht zurückgehalten wird. Die sich am Detektor 16 einstellenden Signale für die drei verschiedenen Substanzen (erstes Lösungsmittel L1, zweites Lösungsmittel L2, Analyt A) sind in Fig. 3 gezeigt. Das den Detektor 16 passierende Eluat wird als aufbereitetes Teil-Eluat bezeichnet.

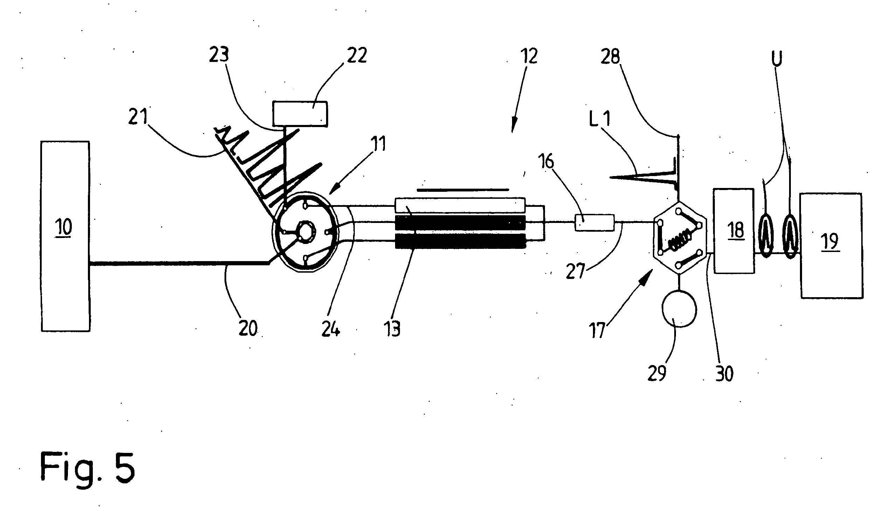

Im Element-Analysator 18 werden durch geeignete Verbrennung (Oxidation oder Pyrolyse) die interessierenden Komponenten (Umwandlungsprodukte U) gebildet, etwa N₂, CO oder CO₂ und mit einem gasförmigen Trägerfluid dem IRMS 19 zugeführt, siehe Fig. 5. Das gasförmige Trägerfluid kann beispielsweise Helium aus der Gasquelle 29 sein. Auch kann dem Element-Analysator 18 eine eigene Gasquelle zugeordnet sein. Vorzugsweise handelt es sich bei dem Element-Analysator um eine Vorrichtung entsprechend dem High Temperature Conversion Elemental Analyzer Finnigan TC/EA der Thermo Electron Corporation bzw. aus dem Hause der Anmelderin. Bestandteile dieser Vorrichtung sind ein Gaschromatograph zur Trennung der gasförmigen Bestandteile, ein geeigneter Verbrennungsofen und eine Schnittstelle für die Zufuhr von Referenzgasen und Trägergas und für die Zufuhr zum IRMS 19. Vorteilhaft ist eine Anpassung der bekannten Vorrichtung an die relativ kleinen Probenmengen durch Verkleinerung bzw. Herabskalierung der Volumina in der Vorrichtung.

Die weiteren Trennsäulen 14, 15 können genutzt werden zum Aufnehmen weiterer interessierender Teil-Eluate aus dem HPLC 10. Das Umschaltventil 11 wird hierzu entsprechend geschaltet.

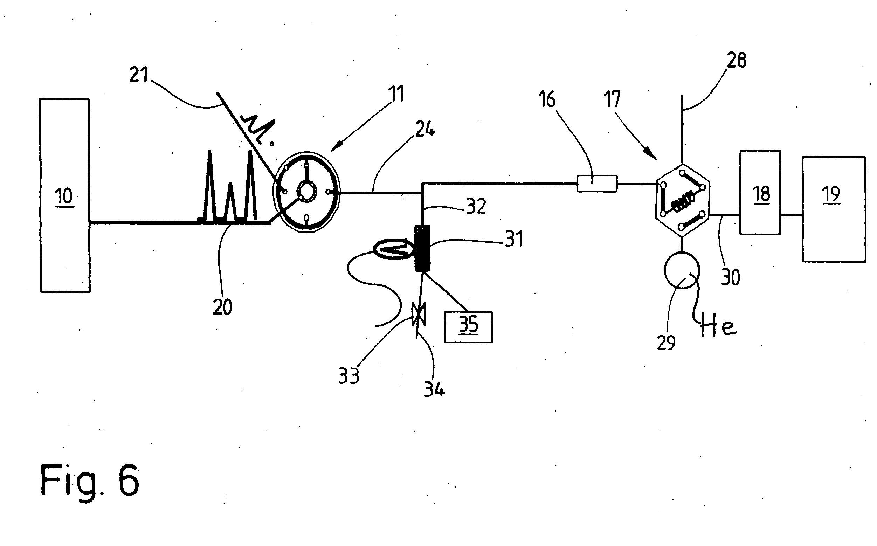

Fig. 6 zeigt eine abgewandelte Vorrichtung. Anstelle der Trennsäulen 13, 14, 15 ist hier eine Speichersäule 31 (Trap-Säule) über eine Verbindungsleitung 32 an die vom Umschaltventil 11 zum Detektor 16 führende Leitung 24 angeschlossen.

Der Verbindungsleitung 32 gegenüberliegend ist an die Pumpe 31 ein Ventil 33 angeschlossen, welche verbunden ist mit einer Waste-Leitung 34 und einer mit einem Vorrat eines zweiten Lösemittels verbundenen Pumpe 35.

Das interessierende Teil-Eluat aus dem HPLC 10 gelangt bei entsprechender Schaltung der Ventile 16, 17 und 33 über die Leitungen 24, 32 in die Speichersäule 31. Nicht gewünschte Bestandteile - auch das Trägerfluid - können über die Waste-Leitung 34 abgeführt werden.

In einem nächsten Schritt wird das erste Umschaltventil 11 geschlossen und die auf der Speichersäule 31 liegende Substanz wird vom zweiten Lösemittel über den Detektor 16 und das Umschaltventil 17 zum Elementanalysator 18 gefördert. Je nach Funktion der Speichersäule 31 kann diese geförderte Substanz das vom HPLC 10 herrührende Trägerfluid noch enthalten oder auch nicht. Beispielsweise kann an der Speichersäule 31 eine Verdampfung des ersten Trägerfluids vorgesehen sein. Dadurch ist es möglich, zuerst das noch mit gespeicherte erste Trägerfluid abzutrennen und erst danach das zweite Trägerfluid (das zweite Lösemittel) zuzuführen, im Gegensatz zu den bislang beschriebenen Verfahrensschritten.

Die in den Fig. 1 bis 5 gezeigten Trennsäulen 13, 14, 15 können auch ersetzt werden durch einen Verdampfer (PTV = Programmed Temperature Vaporizer). Auch dadurch ist eine Trennung des oder der Analyten vom ersten Lösemittel vor der Zufuhr des zweiten Lösemittels möglich.

Nachfolgend wird die Analyse von Acetylsalizylsäure (ASS) und Salicylsäure (SS) aus einer Blutprobe beschrieben. Dabei wird ausgegangen von einem in der Literatur beschriebenen HPLC-Verfahren, siehe Analytical Chemistry, 1998, Vol. 70, 409-414, Gillian P. McMahon and Mary T. Kelly "Determination of Aspirin and Salicylic Acid in Human Plasma by Column-Switching Liquid Chromatography Using On-Line Solid-Phase Extraction".

Mit dem bekannten HPLC-Verfahren werden Blutproben auf den Gehalt von ASS und SS analysiert. Das Eluat des HPLC weist charakteristische Peaks für ASS und SS auf. Bei diesen Peaks handelt es sich um die im Zusammenhang mit dem erfindungsgemäßen Verfahren interessierenden Teile des Eluats. Die Peaks werden aufgefangen - aus dem Eluat "ausgeschnitten" - durch entsprechende Schaltung des in den Fig. 1 bis 6 gezeigten Umschaltventils 11 und auf eine Trennsäule geleitet und dort durch entsprechende Auswahl der stationären Phase festgehalten. Das aus dem HPLC stammende Trägerfluid wird mit Wasser ausgewaschen. Dabei verbleiben die Analyten (Peaks) auf der Säule. Die Peaks können auch auf zwei verschiedenen Säulen gespeichert sein. Anschließend werden die gespeicherten Peaks (mit Wasser als zweitem Trägerfluid) aus der Säule abgezogen bzw. "befreit" durch Temperaturgradienten, anorganischen Puffer oder Säure, und dem Element-Analysator 18 oder einem anderen Hochtemperatur-Reaktor zugeführt. Die sich dort bildenden gasförmigen Umwandlungsprodukte U werden im Isotopenanalysator analysiert zwecks Bestimmung der Isotopenverhältnisse.

### Bezugszeichenliste

- 10: HPLC
- 11: Umschaltventil
- 12: Gruppe Trennsäulen
- 13: Trennsäule
- 14: Trennsäule
- 15: Trennsäule
- 16: Detektor
- 17: Umschaltventil
- 18: Element-Analysator
- 19: IRMS
- 20: Leitung
- 21: Waste-Leitung
- 22: Pumpe
- 23: Leitung
- 24: Leitung
- 25: Leitung
- 26: Leitung
- 27: Leitung
- 28: Waste-Leitung
- 29: Gasquelle
- 30: Leitung
- 31: Speichersäule
- 32: Verbindungsleitung
- 33: Ventil
- 34: Waste-Leitung
- 35: Pumpe
- 36: Speichervolumen
- 37: Speichervolumen
- A: Analyt
- L1: erstes Lösemittel
- L2: zweites Lösemittel
- U: Umwandlungsprodukte

## Patentansprüche

1. Verfahren zur Isotopenverhältnisanalyse Kohlenstoff enthaltender Substanzen, mit folgenden Schritten:
a) Durchführung eines LC-Verfahrens und **dadurch** Bereitstellung eines ersten Eluats, welches zumindest ein erstes flüssiges Trägerfluid und einen oder mehrere Analyten enthält, wobei das Trägerfluid für die unmittelbare Umsetzung in ein für die Isotopenanalyse geeignetes Gas nicht geeignet ist,
b) Auffangen eines interessierenden Teil-Eluats,
c) Aufbereitung des interessierenden Teil-Eluats durch Zusammenführen mit einem zweiten flüssigen Trägerfluid und Abtrennen des ersten Trägerfluids, zur Bildung eines aufbereiteten Teil-Eluats,
d) Aufbereitung des aufbereiteten Teil-Eluats unter Bildung eines oder mehrerer gasförmiger Umwandlungsprodukte der Analyten,
e) Zufuhr der gasförmigen Umwandlungsprodukte mit gasförmigem Trägerfluid zu einem Isotopenanalysator und Bestimmung der Isotopenverhältnisse, **gekennzeichnet durch** die folgenden Merkmale:
f) der interessierende Teil des Eluats wird nach dem LC-Verfahren über eine Trennsäule (13, 14, 15) geführt, dort gefangen und zwischengespeichert,

2. Verfahren nach Anspruch 1, **dadurch gekennzeichnet, dass** das interessierende Teil-Eluat aufgefangen, zwischengespeichert und zusammen mit dem zweiten flüssigen Trägerfluid über eine Trennsäule (13, 14, 15) geführt wird.

3. Verfahren nach Anspruch 1 oder 2, **dadurch gekennzeichnet, dass** das interessierende Teil-Eluat erst mit dem zweiten Trägerfluid zusammengebracht und danach das erste Trägerfluid abgetrennt wird.

4. Verfahren nach Anspruch 1 oder einem der weiteren Ansprüche, **dadurch gekennzeichnet, dass** das zweite Trägerfluid mit dem Teil-Eluat oder das zweite Trägerfluid und das vom ersten Trägerfluid befreite Teil-Eluat über eine Trennsäule (13, 14, 15) geführt werden, und dass ein interessierender Teil des dabei anfallenden zweiten Eluats abgetrennt und für die Aufbereitung gemäß Anspruch 1 Schritt d) zur Verfügung gestellt wird.

5. Verfahren nach Anspruch 4, **dadurch gekennzeichnet, dass** der interessierende Teil des zweiten Eluats auf der Trennsäule (13, 14, 15) zwischengespeichert wird.

6. Verfahren nach Anspruch 1 oder einem der weiteren Ansprüche, **dadurch gekennzeichnet, dass** das aufbereitete Teil-Eluat zur Bildung der gewünschten gasförmigen Umwandlungsprodukte physikalisch, chemisch und/oder elektrochemisch behandelt wird.

7. Verfahren nach Anspruch 6, **dadurch gekennzeichnet, dass** das aufbereitete Teil-Eluat zur Bildung der gewünschten gasförmigen Umwandlungsprodukte der Analyten thermisch zersetzt wird in einem Reaktor.

8. Verfahren nach Anspruch 6, **dadurch gekennzeichnet, dass** ein die Analyten enthaltendes Gas oder Umwandlungsprodukte der Analyten durch elektrolytische Reaktion des Eluats erzeugt werden.

9. Verfahren nach Anspruch 1 oder einem der weiteren Ansprüche, **dadurch gekennzeichnet, dass** als Isotopenanalysator ein Isotopenmassenspektrometer oder eine Laserabsorptionsmesseinrichtung verwendet werden.

10. Vorrichtung zur Isotopenverhältnisanalyse von Kohlenstoff enthaltenden Substanzen, mit folgenden Merkmalen:
a) mit einem Flüssigchromatographen, der auch ein HPLC (10) sein kann, und der ein Eluat abgibt, welches einen oder mehrere Analyten enthält,
b) mit einer dem Flüssigchromatographen nachgeordneten Einrichtung zum Aufnehmen zumindest eines Teils des Eluats und zum Austauschen oder Ersetzen eines im Teil-Eluat enthaltenen flüssigen Trägerfluids gegen ein zweites flüssiges Trägerfluid und zur Bildung eines derart aufbereiteten Teil-Eluats,
c) mit einer Einrichtung zur Bildung eines oder mehrerer gasförmiger Umwandlungsprodukte der Analyten aus dem aufbereiteten Teil-Eluat,
d) mit einem Isotopenanalysator, dem die gasförmigen Umwandlungsprodukte zuführbar sind,
**gekennzeichnet durch** folgendes Merkmal:
e) die dem Flüssigchromatographen nachgeordnete Einrichtung zum Aufnehmen zumindest eines Teil-Eluats enthält mindestens eine Trennsäule (13, 14, 15) oder eine Speichersäule (31).

11. Vorrichtung nach Anspruch 10, **dadurch gekennzeichnet, dass** ein Detektor (16) vorgesehen ist zum Detektieren eines interessierenden Teils des aufbereiteten Teil-Eluats.

12. Vorrichtung nach Anspruch 10 oder 11, **dadurch gekennzeichnet, dass** die Speichersäule (31) auf einer Seite angeschlossen ist an eine Zufuhr für das Teil-Eluat und auf der anderen Seite an eine Pumpe (35) für die Zufuhr des zweiten flüssigen Trägerfluids.

13. Vorrichtung nach Anspruch 10 oder einem der weiteren Ansprüche, **dadurch gekennzeichnet, dass** die dem Flüssigchromatographen nachgeordnete Einrichtung zum Aufnehmen zumindest eines Teil-Eluats ein Multi-Port-Ventil (Umschaltventil 11) aufweist, an das eine Pumpe (22) für die Zufuhr des zweiten flüssigen Trägerfluids, ein Ausgang (Leitung 20) des Flüssigchromatographen, sowie ein Speichervolumen für das Teil-Eluat und/oder eine oder mehrere Säulen (Trennsäulen 13, 14, 15) angeschlossen sind.

14. Vorrichtung nach Anspruch 10 oder einem der weiteren Ansprüche, **dadurch gekennzeichnet, dass** die Einrichtung zur Bildung der gasförmigen Umwandlungsprodukte (U) einen Element-Analysator (18) aufweist.

15. Vorrichtung nach Anspruch 10 oder einem der weiteren Ansprüche, **dadurch gekennzeichnet, dass** der Isotopenanalysator ein Isotopenmassenspektrometer (19) oder eine Laserabsorptionsmesseinrichtung ist.

## Claims

1. Process for isotope ratio analysis of carbon-containing substances, comprising the following steps:
a) performing an LC process and thus providing a first eluate which comprises at least one first liquid carrier fluid and one or more analytes, the carrier fluid being unsuitable for direct conversion to a gas suitable for isotope analysis,
b) collecting an eluate portion of interest,
c) processing the eluate portion of interest by combining with a second liquid carrier fluid and removing the first carrier fluid to form a processed eluate portion,
d) processing the processed eluate portion to form one or more gaseous conversion products of the analytes,
e) supplying the gaseous conversion products with gaseous carrier fluid to an isotope analyzer and determining the isotope ratios, **characterized by** the following feature:
f) the portion of interest from the eluate is conducted by the LC process through a separating column (13, 14, 15) and collected and stored intermediately there.

2. Process according to Claim 1, **characterized in that** the eluate portion of interest is collected, stored intermediately and conducted together with the second liquid carrier fluid through a separating column (13, 14, 15).

3. Process according to Claim 1 or 2, **characterized in that** the eluate portion of interest is first combined with the second carrier fluid and then the first carrier fluid is removed.

4. Process according to Claim 1 or one of the further claims, **characterized in that** the second carrier fluid with the eluate portion or the second carrier fluid and the eluate portion which has been freed of the first carrier fluid are conducted through a separating column (13, 14, 15), and **in that** a portion of interest from the second eluate obtained is removed and provided for the processing according to claim 1 step d).

5. Process according to claim 4, **characterized in that** the portion of interest from the second eluate is stored intermediately on the separating column (13, 14, 15).

6. Process according to claim 1 or one of the further claims, **characterized in that** the processed eluate portion is treated physically, chemically and/or electrochemically to form the desired gaseous conversion products.

7. Process according to claim 6, **characterized in that** the processed eluate portion is thermally decomposed in a reactor to form the desired gaseous conversion products of the analytes.

8. Process according to claim 6, **characterized in that** a gas comprising the analytes or conversion products of the analytes are obtained by electrolytic reaction of the eluate.

9. Process according to claim 1 or one of the further claims, **characterized in that** the isotope analyzer used is an isotope mass spectrometer or a laser absorption measurement device.

10. Apparatus for isotope ratio analysis of carbon-containing substances, comprising the following features:
a) comprising a liquid chromatograph, which may also be an HPLC (10), and which releases an eluate which comprises one or more analytes,
b) comprising a device arranged downstream of the liquid chromatograph, for taking up at least a portion of the eluate and for exchanging or replaying a liquid carrier fluid present in the eluate portion with a second liquid carrier fluid and for forming an eluate portion processed in this way,
c) comprising a device for forming one or more gaseous conversion products of the analytes from the processed eluate portion,
d) comprising an isotope analyzer to which the gaseous conversion products can be supplied, **characterized by** the following feature:
e) the device arranged downstream of the liquid chromatograph, for taking up at least one eluate portion, comprises at least one separating column (13, 14, 15) or a storage column (31).

11. Apparatus according to claim 10, **characterized in that** a detector (16) is provided for detecting a portion of interest from the processed eluate portion.

12. Apparatus according to claim 10 or 11, **characterized in that** the storage column (31) is attached on one side to a feed for the eluate portion and on the other side to a pump (35) for the supply of the second liquid carrier fluid.

13. Apparatus according to claim 10 or one of the further claims, **characterized in that** the device arranged downstream of the liquid chromatograph, for taking up at least one eluate portion, has a multiport valve (switching valve 11) to which are connected a pump (22) for the supply of the second liquid carrier fluid, an outlet (line 20) of the liquid chromatograph, and a storage volume for the eluate portion and/or one or more columns (separating columns 13, 14, 15).

14. Apparatus according to claim 10 or one of the further claims, **characterized in that** the device for formation of the gaseous conversion products (U) has an element analyzer (18).

15. Apparatus according to claim 10 or one of the further claims, **characterized in that** the isotope analyzer is an isotope mass spectrometer (19) or a laser absorption measurement device.

## Revendications

1. Procédé pour l'analyse des rapports d'isotopes de substances contenant du carbone, présentant les étapes suivantes :
a) réalisation d'un procédé de chromatographie liquide (CL) et donc mise à disposition d'un premier éluat, qui contient au moins un premier fluide support liquide et un ou plusieurs analytes, le fluide support n'étant pas approprié pour la transformation immédiate en un gaz approprié pour l'analyse d'isotopes,
b) récupération d'un éluat partiel intéressant,
c) préparation de l'éluat partiel intéressant par réunion avec un deuxième fluide support liquide et séparation du premier fluide support pour former un éluat partiel préparé,
d) préparation de l'éluat partiel préparé avec formation d'un ou de plusieurs produits de conversion gazeux des analytes,
e) alimentation des produits de conversion gazeux avec du fluide support gazeux dans un analyseur d'isotopes et détermination du rapport d'isotopes, **caractérisé par** les caractéristiques suivantes :
f) la partie intéressante de l'éluat est guidée après le procédé CL sur une colonne de séparation (13, 14, 15), y est récupérée et entreposée de manière intermédiaire.

2. Procédé selon la revendication 1, **caractérisé en ce que** l'éluat partiel intéressant est récupéré, entreposé de manière intermédiaire et introduit ensemble avec le deuxième fluide support liquide sur une colonne de séparation (13, 14, 15).

3. Procédé selon la revendication 1 ou 2, **caractérisé en ce que** l'éluat partiel intéressant est d'abord rassemblé avec le deuxième fluide support puis le premier fluide support est séparé.

4. Procédé selon la revendication 1 ou l'une quelconque des autres revendications, **caractérisé en ce que** le deuxième fluide support est guidé avec l'éluat partiel ou le deuxième fluide support et l'éluat partiel libéré du premier fluide support sont guidés sur une colonne de séparation (13, 14, 15), et **en ce qu'**une partie intéressante du deuxième éluat ainsi produit est séparée et mise à disposition pour la préparation selon la revendication 1, étape d).

5. Procédé selon la revendication 4, **caractérisé en ce que** la partie intéressante du deuxième éluat est entreposée de manière intermédiaire sur la colonne de séparation (13, 14, 15).

6. Procédé selon la revendication 1 ou l'une quelconque des autres revendications, **caractérisé en ce que** l'éluat partiel préparé est traité physiquement, chimiquement et/ou électrochimiquement pour la formation des produits de conversion gazeux formés.

7. Procédé selon la revendication 6, **caractérisé en ce que** l'éluat partiel préparé est décomposé thermiquement dans un réacteur pour la formation des produits de conversion gazeux souhaités des analytes.

8. Procédé selon la revendication 6, **caractérisé en ce qu'**un gaz contenant les analytes ou des produits de conversion des analytes sont obtenus par réaction électrolytique de l'éluat.

9. Procédé selon la revendication 1 ou l'une des autres revendications, **caractérisé en ce qu'**on utilise comme analyseur d'isotopes un spectromètre de masse d'isotopes ou un dispositif de mesure par absorption à laser.

10. Dispositif pour l'analyse des rapports d'isotopes de substances contenant du carbone, présentant les caractéristiques suivantes :
a) un chromatographe liquide qui peut également être un HPLC (10) et qui donne un éluat qui contient un ou plusieurs analytes,
b) un dispositif disposé en aval du chromatographe liquide destiné à recevoir au moins une partie de l'éluat et à échanger ou remplacer un fluide support liquide contenu dans l'éluat partiel contre un deuxième fluide support liquide et à former un éluat partiel ainsi préparé,
c) un dispositif pour la formation d'un ou de plusieurs produits de conversion gazeux des analytes à partir de l'éluat partiel préparé,
d) un analyseur d'isotopes dans lequel on peut introduire les produits de conversion gazeux,
**caractérisé par** la caractéristique suivante :
e) le dispositif disposé en aval du chromatographe liquide destiné à recevoir au moins un éluat partiel contient au moins une colonne de séparation (13, 14, 15) ou une colonne d'accumulation (31).

11. Dispositif selon la revendication 10, **caractérisé en ce qu'**un détecteur (16) est prévu, destiné à détecter une partie intéressante de l'éluat partiel préparé.

12. Dispositif selon la revendication 10 ou 11, **caractérisé en ce que** la colonne d'accumulation (31) est raccordée d'un côté à une alimentation pour l'éluat partiel et de l'autre côté à une pompe (35) pour l'alimentation du deuxième fluide support liquide.

13. Dispositif selon la revendication 10 ou l'une quelconque des autres revendications, **caractérisé en ce que** le dispositif disposé en aval du chromatographe liquide destiné à recevoir au moins un éluat partiel présente une soupape à ports multiples (soupape de commutation 11) sur laquelle sont raccordés une pompe (22) pour l'alimentation du deuxième fluide support liquide, une sortie (conduite 20) du chromatographe liquide ainsi qu'un volume d'accumulation pour l'éluat partiel et/ou une ou plusieurs colonnes (colonnes de séparation 13, 14, 15).

14. Dispositif selon la revendication 10 ou l'une quelconque des autres revendications, **caractérisé en ce que** le dispositif pour la formation des produits de conversion gazeux (U) présente un analyseur d'éléments (18).

15. Dispositif selon la revendication 10 ou l'une quelconque des autres revendications, **caractérisé en ce que** l'analyseur d'isotopes est un spectromètre de masse d'isotopes (19) ou un dispositif de mesure par absorption à laser.
